# EUROPÄISCHE PATENTANMELDUNG

(11) **EP 3 188 523 A1**
(43) Veröffentlichungstag der Anmeldung: **05.07.2017**
(21) Anmeldenummer: 15203175.3
(22) Anmeldetag: 30.12.2015
(51) Int. Cl.: H04W 12/06, H04W 48/18, H04W 8/08

(54) **KOMMUNIKATIONSSYSTEM FÜR DIE KOMMUNIKATION IN EINEM KOMMUNIKATIONSNETZWERK MIT SUBNETZWERKEN**

(71) Anmelder: Deutsche Telekom AG, 53113 Bonn (DE)
(72) Erfinder: Bischinger, Kurt, 1100 Wien (AT)
(74) Vertreter: Patentship Patentanwaltsgesellschaft mbH

(57) **Zusammenfassung**

Die Erfindung betrifft ein Kommunikationssystem (300) für die Kommunikation in einem Kommunikationsnetzwerk (303), wobei das Kommunikationsnetzwerk (303) ein erstes Subnetzwerk (307) und ein zweites Subnetzwerk (311) aufweist, mit: einer ersten Identifizierungsentität (309), welche dem ersten Subnetzwerk (307) zugeordnet und ausgebildet ist, eine Identität (302) eines Kommunikationsendgeräts (301) zu empfangen, und das Kommunikationsendgerät (301) auf der Basis der Identität (302) für die Kommunikation über das erste Subnetzwerk (307) zu identifizieren; einer zweiten Identifizierungsentität (313), welche dem zweiten Subnetzwerk (311) zugeordnet und ausgebildet ist, die Identität (302) des Kommunikationsendgeräts (301) zu empfangen, und das Kommunikationsendgerät (301) auf der Basis der Identität (302) für die Kommunikation über das zweite Subnetzwerk (311) zu identifizieren; und einer Management-Entität (319), welche ausgebildet ist, das Kommunikationsendgerät (301) für die Kommunikation über das jeweilige Subnetzwerk (307, 311) zu authentifizieren.

## Beschreibung

Die vorliegende Erfindung betrifft ein Kommunikationssystem für die Kommunikation in einem Kommunikationsnetzwerk mit mehreren Subnetzwerken, insbesondere in einem 5G-Kommunikationsnetzwerk mit mehreren Slices.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Räumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringst möglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauens, Identität und Privatsphäre der Nutzer erwartet.

Es ist die Aufgabe der vorliegenden Erfindung, ein Konzept zu schaffen, um die Leistungsfähigkeit und Flexibilität der Kommunikation zu steigern, insbesondere in 5G bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

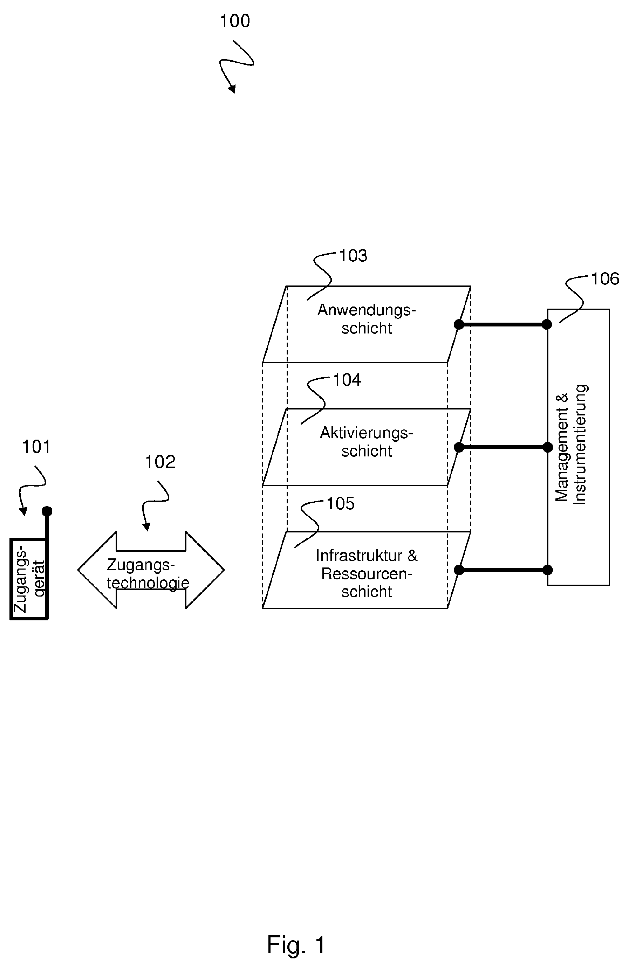

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs-und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das

Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

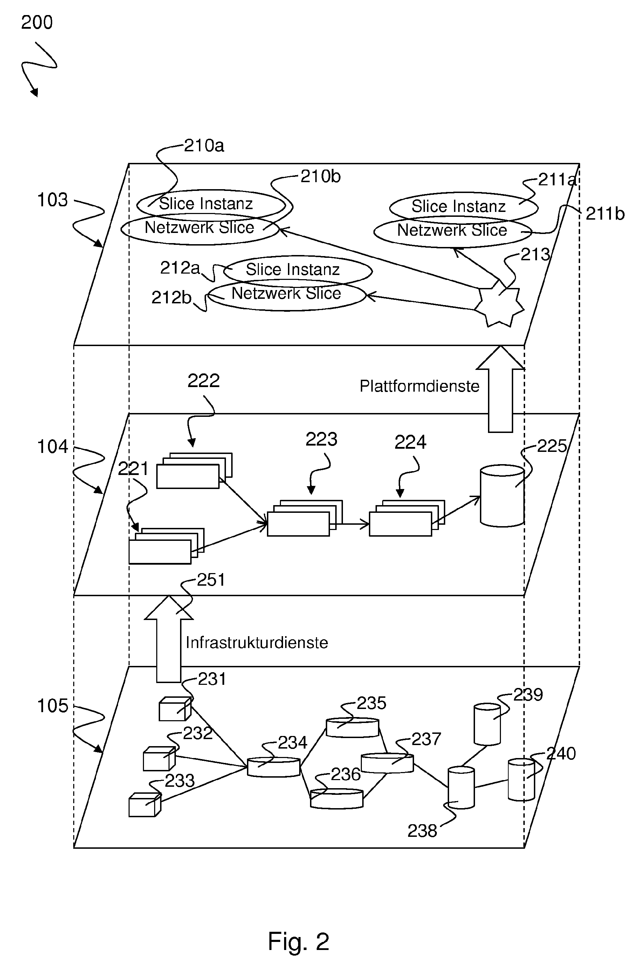

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben. Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instandhalten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211 b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211 b, 212b für verschiedene Anwender, z.B. Kunden, beispielsweise als eine neue Netzwerk Slice Instanz 210a, 211 a, 212a. D.h. ein Netzwerk Slice 210b, 211 b, 212b, welcher beispielsweise einer Automotive Anwendung zugeordnet ist, kann auch für Anwendungen verschiedener anderer industrieller Anwendungen genutzt werden. Die Slices Instanzen 210a, 211 a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Gemäß einem ersten Aspekt betrifft die Erfindung ein Kommunikationssystem für die Kommunikation in einem Kommunikationsnetzwerk, wobei das Kommunikationsnetzwerk ein erstes Subnetzwerk und ein zweites Subnetzwerk aufweist, mit: einer ersten Identifizierungsentität, welche dem ersten Subnetzwerk zugeordnet und ausgebildet ist, eine Identität eines Kommunikationsendgeräts zu empfangen, und das Kommunikationsendgerät auf der Basis der Identität für die Kommunikation über das erste Subnetzwerk zu identifizieren; einer zweiten Identifizierungsentität, welche dem zweiten Subnetzwerk zugeordnet und ausgebildet ist, die Identität des Kommunikationsendgerät zu empfangen, und das Kommunikationsendgerät auf der Basis der Identität für die Kommunikation über das zweite Subnetzwerk zu identifizieren; und einer Management-Entität, welche ausgebildet ist, das Kommunikationsendgerät für die Kommunikation über das jeweilige Subnetzwerk zu authentifizieren.

Aufgrund des Subnetzwerk-Aufbaus des Kommunikationsnetzwerks kann die Leistungsfähigkeit der Kommunikation gesteigert werden, denn Kommunikationsverbindungen können je nach der Identität des Kommunikationsendgeräts über das erste Subnetzwerk oder das zweite Subnetzwerk aufgebaut werden. Damit wird eine dienstabhängige Kommunikation möglich, d.h. je nach angefordertem Dienst wird die Kommunikation über ein entsprechendes Subnetz geführt, welches die nachgefragten Dienste und die entsprechende Infrastruktur bereitstellt. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden. Zusammen mit einer erhöhten Leistungsfähigkeit kann das Kommunikationssystem auch stark heterogene Umgebungen umfassen und bietet die Fähigkeit, Vertrauen, Identität und Privatsphäre der Nutzer zu sichern.

Gemäß einer Ausführungsform des Kommunikationssystems ist die jeweilige Identifizierungsentität ausgebildet, die Identität an die Management-Entität zu übermitteln, und die Management-Entität ist ausgebildet, das Kommunikationsendgerät auf der Basis der übermittelten Identität zu authentifizieren.

Dies bringt den Vorteil einer effizienten Kommunikation, da eine zentrale Management-Entität das jeweilige Kommunikationsendgerät authentifizieren kann und ihr das entsprechende Subnetzwerk zuweisen kann. Damit kann die Komplexität hinter den Subnetzwerken in der Management-Entität verborgen werden.

Gemäß einer Ausführungsform des Kommunikationssystems ist die Management-Entität ausgebildet, das Kommunikationsendgerät anhand einer Zuordnung von Subnetzwerken des Kommunikationsnetzwerkes zu Kommunikationsendgeräten, insbesondere anhand einer Zuordnung von Subnetzwerken zu Identitäten von Kommunikationsendgeräten, zu authentifizieren.

Dies bringt den Vorteil, dass die Management-Entität durch Abfragen einer Zuordnung, beispielsweise einer Tabelle oder eines Speicherfeldes auf einfache Weise eine Identifizierung des Kommunikationsendgerätes vornehmen kann. Die Management-Entität kann diese Zuordnung dynamisch anlegen oder ändern, so dass neue Dienste oder Anwendungen dem Kommunikationsendgerät schnell zur Verfügung gestellt werden können.

Gemäß einer Ausführungsform des Kommunikationssystems ist die Management-Entität ausgebildet, das Kommunikationsendgerät für die Kommunikation über das erste Subnetzwerk zu authentifizieren, falls das erste Subnetzwerk der Identität des Kommunikationsendgerätes zugeordnet ist, oder das Kommunikationsendgerät für die Kommunikation über das zweite Subnetzwerk zu authentifizieren, falls das zweite Subnetzwerk der Identität des Kommunikationsendgerätes zugeordnet ist.

Dies bringt den Vorteil, dass die Management-Entität als zentrale Intelligenz auf der Schicht der Subnetzwerke, d.h. der Anwendungsschicht gemäß der Übersichtsdarstellung in Figur 1 fungiert und schnell die Authentifizierung des Kommunikationsendgeräts für das entsprechende Subnetzwerk ausführen kann, ohne dass dazu eine Anfrage an höhere Netzwerkschichten notwendig ist, die z.B. in der Management & Instrumentierungsebene angeordnet sind gemäß der Übersichtsdarstellung in Figur 1.

Gemäß einer Ausführungsform des Kommunikationssystems ist die Management-Entität ausgebildet, der ersten Identifizierungsentität eine Subnetzwerk-Kennung der zweiten Identifizierungsentität zu übermitteln, falls das Kommunikationsendgerät für die Kommunikation über das zweite Subnetzwerk authentifiziert ist, oder der zweiten Identifizierungsentität eine Subnetzwerk-Kennung der ersten Identifizierungsentität zu übermitteln, falls das Kommunikationsendgerät für die Kommunikation über das erste Subnetzwerk authentifiziert ist.

Dies bringt den Vorteil, dass bei Kontaktaufnahme des Kommunikationsendgeräts mit der ersten Identifizierungsentität, diese die Anfrage des Kommunikationsendgeräts beantworten kann, indem sie dem Kommunikationsendgerät die Subnetzwerk-Kennung der zweiten Identifizierungsentität übermittelt und dem Kommunikationsendgerät damit aufzeigen kann, über welches Subnetzwerk es sich mit dem Kommunikationsnetzwerk verbinden kann. Das gleiche gilt für den umgekehrten Fall der Kontaktaufnahme des Kommunikationsendgeräts mit der zweiten Identifizierungsentität. Somit wird ein rekursiver Verbindungsaufbau möglich ohne dass das Kommunikationsendgerät wissen muss, über welches Subnetzwerk es sich mit dem Kommunikationsnetz verbinden muss.

Gemäß einer Ausführungsform des Kommunikationssystems ist die erste Identifizierungsentität ausgebildet, die von der Management-Entität übermittelte Subnetzwerk-Kennung des zweiten Subnetzwerkes dem Kommunikationsendgerät oder der zweiten Identifizierungsentität zu übermitteln, oder die zweite Identifizierungsentität ist ausgebildet, die von der Management-Entität übermittelte Subnetzwerk-Kennung des ersten Subnetzwerkes dem Kommunikationsendgerät oder der ersten Identifizierungsentität zu übermitteln.

Dies bringt den Vorteil, dass bei Kontaktaufnahme des Kommunikationsendgeräts mit der ersten Identifizierungsentität, diese die Anfrage des Kommunikationsendgeräts beantworten kann, indem sie dem Kommunikationsendgerät oder der zweiten Identifizierungsentität die Subnetzwerk-Kennung der zweiten Identifizierungsentität übermittelt, so dass ein Verbindungsaufbau zustande kommen kann. Im Falle der Übermittlung der Subnetzwerk-Kennung an die zweite Identifizierungs-Entität ist diese in der Lage, eine Kommunikationsanfrage des Kommunikationsendgeräts zu beantworten. Das gleiche gilt für den umgekehrten Fall der Kontaktaufnahme des Kommunikationsendgeräts mit der zweiten Identifizierungsentität. Somit wird ein rekursiver Verbindungsaufbau möglich ohne dass das Kommunikationsendgerät wissen muss, über welches Subnetzwerk es sich mit dem Kommunikationsnetz verbinden muss.

Gemäß einer Ausführungsform des Kommunikationssystems ist jedem Subnetzwerk eine Subnetzwerk-Kennung zugeordnet (Lookup-Tabelle), und die Management-Entität ist ausgebildet, das Kommunikationsendgerät auf der Basis zumindest einer der folgenden Zuordnungen der Subnetzwerk-Kennung zuzuordnen: einer Zuordnung der Identifikation des Kommunikationsendgerätes, insbesondere einer Hardware-Kennung des Kommunikationsendgerätes wie IMSI (International Mobile Subscriber Identity) oder IMEI (International Mobile Station Equipment Identity) oder eID (embedded identifier) und/oder einer Zuordnung eines Kommunikationsdienstes zu dem Kommunikationsendgerät und/oder einer Zuordnung einer Softwareanwendung zu dem Kommunikationsendgerät, und/oder eines Betriebssystems des jeweiligen Kommunikationsendgerätes zu einem der beiden Subnetzwerke.

Dies bietet den Vorteil, dass das Kommunikationsendgerät anhand mehrerer Kennungen einem Subnetz zugeordnet werden kann, wie beispielsweise IMSI, IMEI, eID eines Kommunikationsdienstes, einer Softwareanwendung oder einem Betriebssystem, was einen höheren Grad an Flexibilität bietet.

Die Zuordnungen von Subnetzwerk und Subnetzwerk-Kennung können effizient mittels einer Lookup-Tabelle von der Management-Entität verwaltet werden. Subnetzwerke können unterschiedlichen Anwendungen oder Diensten zugeordnet sein, sodass das Kommunikationsendgerät in weiterer Abhängigkeit hiervon über mehrere Subnetzwerke kommunizieren kann. Die Subnetzwerke unterscheiden sich voneinander durch unterschiedliche Funktionen, Dienste oder Anwendungen.

Gemäß einer Ausführungsform des Kommunikationssystems ist das Kommunikationsnetzwerk ein Netzwerk einer fünften Generation (5G) oder einer weiteren Generation, und das erste Subnetzwerk und das zweite Subnetzwerk sind Slices des Kommunikationsnetzwerkes.

Damit können alle Vorteile der 5G Netzstruktur gemäß den Figuren 1 und 2 realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Gemäß einer Ausführungsform des Kommunikationssystems ist die jeweilige Identifizierungsentität ausgebildet, von dem Kommunikationsendgerät eine Subnetzwerk-Kennung zu empfangen und dem Kommunikationsendgerät dasjenige Subnetzwerk des Kommunikationsnetzwerkes zuzuordnen, das der empfangenen Subnetzwerk-Kennung zugeordnet ist oder einem durch die empfangene Subnetzwerk-Kennung angezeigtem Subnetzwerk entspricht. (Roaming)

Dies bringt den Vorteil, dass dem Kommunikationsendgerät diejenigen Dienste über das entsprechende Subnetzwerk zur Verfügung gestellt werden, dem es zugeordnet ist, beispielsweise durch eine vorhergehende Anmeldung oder eine vorherige Einstellung des Betreibers des Kommunikationssystems. Ferner bringt dies den Vorteil, dass Roaming damit effizient von der jeweiligen Identifizierungsentität realisiert werden kann. Ferner wird der Vorteil erzielt, dass das Kommunikationssystem mehrere Kommunikationsnetze der gleichen Struktur umfassen kann, beispielsweise ein Heimatkommunikationsnetzwerk und ein Fremdkommunikationsnetzwerk und ein effizientes Roaming zulässt.

Gemäß einer Ausführungsform des Kommunikationssystems ist die erste Identifizierungsentität ausgebildet, die Kommunikation des Kommunikationsendgerätes über das erste Subnetzwerk aufzubauen, falls das Kommunikationsendgerät für die Kommunikation über das erste Subnetzwerk authentifiziert ist, und die zweite Identifizierungsentität ist ausgebildet, die Kommunikation des Kommunikationsendgerätes über das zweite Subnetzwerk aufzubauen, falls das Kommunikationsendgerät für die Kommunikation über das zweite Subnetzwerk authentifiziert ist.

Dies bringt den Vorteil, dass jedes Subnetzwerk eigenständig eine Kommunikationsverbindung mit dem Kommunikationsendgerät aufbauen kann, wenn das Kommunikationsendgerät dafür authentifiziert ist.

Gemäß einer Ausführungsform des Kommunikationssystems ist die jeweilige Identifizierungsentität ausgebildet, das Kommunikationsendgerät für die Kommunikation zu autorisieren, für die Kommunikation einen Kommunikations-Bearer aufzubauen oder zu modifizieren, einen Kommunikations-Bearer bei einer Änderung einer Netzwerkentität des jeweiligen Subnetzwerkes nachzuführen, die Kommunikation an eine weitere Identifizierungsentität des Kommunikationsnetzwerkes zu übergeben.

Dies bringt den Vorteil, dass die jeweiligen Subnetze voneinander entkoppelt ausgeführt sein können und die jeweiligen Identifizierungsentitäten nur die Funktionalitäten aufweisen müssen, die notwendig sind, um eine Signalisierung über das jeweilige Subnetz durchzuführen.

Gemäß einer Ausführungsform des Kommunikationssystems ist die jeweilige Identifizierungsentität ausgebildet, einen Aufenthaltsort des Kommunikationsendgerätes zu verwalten.

Dies bringt den Vorteil, dass Lokalisierungsdienste durch Abfrage der jeweiligen Identifizierungsentität realisiert werden können.

Gemäß einer Ausführungsform des Kommunikationssystems weist das Kommunikationssystem eine Basisstation auf, mit welcher die erste Identifizierungsentität und die zweite Identifizierungsentität kommunikationstechnisch verbunden sind, und die Basisstation ist ausgebildet, von dem Kommunikationsendgerät eine Verbindungsanfrage mit der Identifizierung zu empfangen, und die Identifizierung an die jeweilige Identifizierungsentität zwecks Identifizierung des Kommunikationsendgerätes zu übermitteln.

Dies bringt den Vorteil, dass die Kommunikationsendgeräte mobil sein können und ihre Kommunikationsanfragen über eine Basisstation, z.B. ein eNodeB an die jeweiligen Identifizierungsentitäten der Subnetze weitergeleitet werden. Die Kommunikationsendgeräte müssen dabei nicht wissen müssen, welchem Subnetz sie zugeordnet sind, es reicht aus, eine Verbindungsanfrage über die Basisstation zu stellen, um einem entsprechenden Subnetzwerk zugeteilt zu werden.

Gemäß einer Ausführungsform des Kommunikationssystems ist das erste Subnetzwerk ein Default-Subnetzwerk, und die Basisstation ist ausgebildet, die Verbindungsanfrage des Kommunikationsendgerätes zu empfangen und an die erste Identifizierungsentität weiterzuleiten, falls die Verbindungsanfrage keine Subnetzwerk-Kennung, welche ein Subnetzwerk identifiziert, aufweist.

Dies bringt den Vorteil, dass die Kommunikationsendgeräte dabei nicht wissen müssen, welchem Subnetz sie zugeordnet sind. Sie können eine Verbindungsanfrage ohne Subnetzwerk-Kennung über die Basisstation stellen, welche die Verbindungsanfrage dann an ein Default-Subnetzwerk weiterleitet. Das Kommunikationssystem verfügt über die Intelligenz, die Verbindungsanfrage aufzulösen und dem Kommunikationsendgerät das ihm zugeordnete Subnetzwerk mitzuteilen bzw. die Kommunikation über das entsprechende Subnetzwerk aufzubauen.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 eine schematische Darstellung eines Kommunikationssystems 300 mit einem Kommunikationsendgerät 301 und einem Kommunikationsnetz 303 gemäß einer beispielhaften Ausführungsform;
Fig. 4 eine schematische Darstellung eines Verfahrens 400 zur Kommunikation in einem Kommunikationsnetzwerk mit einer Mehrzahl von Subnetzwerken gemäß einer beispielhaften Ausführungsform; und
Fig. 5 eine schematische Darstellung des Einbuchungsvorgangs eines Kommunikationsendgerätes in ein Kommunikationsnetz am Beispiel eines 5G-Netzes 500 gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

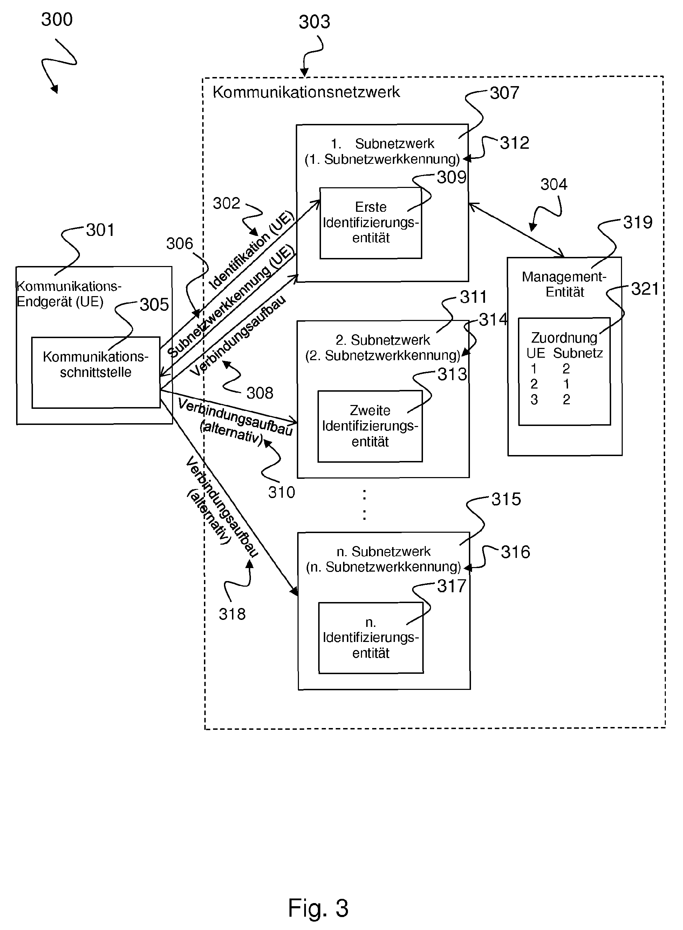

Fig. 3 zeigt eine schematische Darstellung eines Kommunikationssystems 300 mit einem Kommunikationsendgerät 301 und einem Kommunikationsnetz 303 gemäß einer beispielhaften Ausführungsform.

Das Kommunikationsendgerät 301 umfasst eine Kommunikationsschnittstelle 305, um Nachrichten mit dem Kommunikationsnetzwerk 303 auszutauschen und eine Verbindung des Kommunikationsendgerätes 301 mit dem bzw. über das Kommunikationsnetzwerk 303 aufzubauen.

Das Kommunikationsnetzwerk 303 umfasst eine Mehrzahl von Subnetzwerken 307, 311, 315 mit einem ersten Subnetzwerk 307, einem zweiten Subnetzwerk 311, und weiteren Subnetzwerken, von denen beispielhaft ein n. Subnetzwerk 315 dargestellt ist. Diese Mehrzahl von Subnetzwerken entsprechen einer Mehrzahl von Slices 210b, 211 b, 212b, wie oben zu Figur 1 und Figur 2 beschrieben. In dem ersten Subnetzwerk 307 ist eine erste Identifizierungsentität 309 angeordnet, mit der das Kommunikationsendgerät 301 identifiziert werden kann. In dem zweiten Subnetzwerk 311 ist eine zweite Identifizierungsentität 313 angeordnet, mit der das Kommunikationsendgerät 301 identifiziert werden kann. Das gleiche gilt für die weiteren Subnetzwerke, d.h. in dem n-ten Subnetzwerk 315 ist eine n-te Identifizierungsentität 317 angeordnet, mit der das Kommunikationsendgerät 301 identifiziert werden kann.

Jedem Subnetzwerk 307, 311, 315 des Kommunikationsnetzwerkes 303 ist eine Subnetzwerk-Kennung 312, 314, 316 zugeordnet, die das entsprechende Subnetzwerk identifiziert. Das Kommunikationsnetzwerk 303 umfasst ferner eine Management-Entität 319, welche eine Zuordnung 321 des Kommunikationsendgerätes 301 zu einem der Subnetzwerke 307, 311, 315 verwaltet.

Die Kommunikationsschnittstelle 305 des Kommunikationsendgeräts 301 ist dafür ausgelegt, eine Identifikation 302 des Kommunikationsendgerätes 301 an die erste Identifizierungsentität 309 des ersten Subnetzwerkes 307 auszusenden, um einen Verbindungsaufbau 308 über das erste Subnetzwerk 307 zu initiieren.

Die Kommunikationsschnittstelle 305 ist ferner dafür ausgelegt, über das erste Subnetzwerk 307 eine Subnetzwerk-Kennung 306 zu empfangen, welche beispielsweise dem zweiten Subnetzwerk 311 zugeordnet sein kann, und welche in der von der Management-Entität verwalteten Zuordnung 321, beispielsweise einer Tabelle in der Management-Entität, abgelegt sein kann.

Die Kommunikationsschnittstelle 305 ist ferner dafür ausgelegt, ansprechend auf den Empfang der Subnetzwerk-Kennung 306 eine Kommunikationsverbindung 310 über das zweite Subnetzwerk 311 aufzubauen, d.h. bei Zuordnung der Subnetzwerk-Kennung 306 zu dem zweiten Subnetzwerk 311. Falls die Subnetzwerk-Kennung 306 einem anderen Subnetzwerk, beispielsweise dem n-ten Subnetzwerk 315 zugeordnet ist, wird die Kommunikationsschnittstelle 305 eine Kommunikationsverbindung 318 über das n-te Subnetzwerk 315 aufbauen.

Die erste Identifizierungsentität 309 ist dem ersten Subnetzwerk 307 zugeordnet und dazu auslegt, eine Identität 302 eines Kommunikationsendgeräts 301 zu empfangen, und das Kommunikationsendgerät 301 auf der Basis der Identität 302 für die Kommunikation über das erste Subnetzwerk 307 zu identifizieren.

Die zweite Identifizierungsentität 313 ist dem zweiten Subnetzwerk 311 zugeordnet und dafür ausgelegt, die Identität 302 des Kommunikationsendgeräts 301 zu empfangen, und das Kommunikationsendgerät 301 auf der Basis der Identität 302 für die Kommunikation über das zweite Subnetzwerk 311 zu identifizieren.

Die Management-Entität 319 ist dazu ausgelegt, das Kommunikationsendgerät 301 für die Kommunikation über das jeweilige Subnetzwerk 307, 311 zu authentifizieren.

Die jeweilige Identifizierungsentität 309, 313 können die Identität 302 an die Management-Entität 319 übermitteln. Die Management-Entität 319 kann das Kommunikationsendgerät 301 auf der Basis der übermittelten Identität 302 authentifizieren.

Die Management-Entität 319 kann das Kommunikationsendgerät 301 anhand einer Zuordnung 321 von Subnetzwerken 307, 311, 315 des Kommunikationsnetzwerkes 303 zu Kommunikationsendgeräten 301, beispielsweise anhand einer Zuordnung 321 von Subnetzwerken 307, 311, 315 zu Identitäten 302 von Kommunikationsendgeräten 301 authentifizieren.

Die Management-Entität 319 kann das Kommunikationsendgerät 301 für die Kommunikation über das erste Subnetzwerk 307 authentifizieren, falls das erste Subnetzwerk 307 der Identität des Kommunikationsendgerätes 301 zugeordnet ist. Die Management-Entität 319 kann das Kommunikationsendgerät 301 für die Kommunikation über das zweite Subnetzwerk 311 authentifizieren, falls das zweite Subnetzwerk 311 der Identität 302 des Kommunikationsendgerätes 301 zugeordnet ist.

Die Management-Entität 319 kann der ersten Identifizierungsentität 309 eine Subnetzwerk-Kennung 314 der zweiten Identifizierungsentität 313 übermitteln, falls das Kommunikationsendgerät 301 für die Kommunikation über das zweite Subnetzwerk 311 authentifiziert ist. Die Management-Entität 319 kann der zweiten Identifizierungsentität 313 eine Subnetzwerk-Kennung 312 der ersten Identifizierungsentität 309 übermitteln, falls das Kommunikationsendgerät 301 für die Kommunikation über das erste Subnetzwerk 307 authentifiziert ist.

Die erste Identifizierungsentität 309 kann die von der Management-Entität 319 übermittelte Subnetzwerk-Kennung 314 des zweiten Subnetzwerkes 311 dem Kommunikationsendgerät 301 oder der zweiten Identifizierungsentität 313 übermitteln. Die zweite Identifizierungsentität 313 kann die von der Management-Entität 319 übermittelte Subnetzwerk-Kennung 312 des ersten Subnetzwerkes 307 dem Kommunikationsendgerät 301 oder der ersten Identifizierungsentität 309 übermitteln.

Jedem Subnetzwerk 307, 311 ist eine Subnetzwerk-Kennung 312, 314 zugeordnet, beispielsweise in Form einer Lookup-Tabelle. Die Management-Entität 319 kann das Kommunikationsendgerät 301 auf der Basis von einer oder mehrerer der folgenden Zuordnungen der Subnetzwerk-Kennung 312, 314 zuordnen: einer Zuordnung der Identifikation 302 des Kommunikationsendgerätes 301, beispielsweise einer Hardware-Kennung des Kommunikationsendgerätes 301 wie IMSI oder IMEI oder eID zu der Subnetzwerk-Kennung 312, 314, und/oder einer Zuordnung eines Kommunikationsdienstes zu dem Kommunikationsendgerät 301 und/oder einer Zuordnung einer Softwareanwendung zu dem Kommunikationsendgerät 301, und/oder eines Betriebssystems des jeweiligen Kommunikationsendgerätes 301 zu einem der beiden Subnetzwerke 307, 311.

Das Kommunikationsnetzwerk 303 kann ein Netzwerk einer fünften Generation (5G) oder einer weiteren Generation sein, beispielsweise gemäß der Beschreibung zu den Figuren 1 und 2. Das erste Subnetzwerk 307 und das zweite Subnetzwerk 311 können Slices des Kommunikationsnetzwerkes 303 sein, beispielsweise Slices 210b, 211 b, 212b oder Slice Instanzen 210a, 211 a, 212a der Anwendungsschicht 103 wie in den Figuren 1 und 2 beschrieben.

Die jeweilige Identifizierungsentität 309, 313 kann von dem Kommunikationsendgerät 301 eine Subnetzwerk-Kennung 306 empfangen und dem Kommunikationsendgerät 301 dasjenige Subnetzwerk 307, 311 des Kommunikationsnetzwerkes 303 zuordnen, das der empfangenen Subnetzwerk-Kennung 306 zugeordnet ist oder einem durch die empfangene Subnetzwerk-Kennung 306 angezeigtem Subnetzwerk entspricht. Damit kann die jeweilige Identifizierungsentität 309, 313 für ein effizientes Roaming sorgen.

Die erste Identifizierungsentität 309 kann die Kommunikation des Kommunikationsendgerätes 301 über das erste Subnetzwerk 307 aufbauen, falls das Kommunikationsendgerät 301 für die Kommunikation über das erste Subnetzwerk 307 authentifiziert ist. Die zweite Identifizierungsentität 313 kann die Kommunikation des Kommunikationsendgerätes 301 über das zweite Subnetzwerk 311 aufbauen, falls das Kommunikationsendgerät 301 für die Kommunikation über das zweite Subnetzwerk 311 authentifiziert ist.

Die jeweilige Identifizierungsentität 309, 313 kann das Kommunikationsendgerät 301 für die Kommunikation autorisieren, für die Kommunikation einen Kommunikations-Bearer (Kommunikationsträger, beispielsweise einen Radiokanal) aufbauen oder modifizieren, einen Kommunikations-Bearer bei einer Änderung einer Netzwerkentität des jeweiligen Subnetzwerkes 307, 311 nachführen oder die Kommunikation an eine weitere Identifizierungsentität innerhalb des gleichen Subnetzwerks des Kommunikationsnetzwerkes 303 übergeben.

Die jeweilige Identifizierungsentität 309, 313 kann ferner die Funktionen einer MME gemäß LTE Netzwerktopologie umfassen.

Die jeweilige Identifizierungsentität 309, 313 kann dazu ausgelegt sein, einen Aufenthaltsort des Kommunikationsendgerätes 301 zu verwalten.

Das Kommunikationssystem 300 kann eine Basisstation, z.B. einen eNodeB aufweisen, mit welcher die erste Identifizierungsentität 309 und die zweite Identifizierungsentität 313 kommunikationstechnisch verbunden sein können. Die Basisstation kann von dem Kommunikationsendgerät 301 eine Verbindungsanfrage mit der Identifikation 302 des Kommunikationsendgeräts 301 empfangen und die Identifikation 302 an die jeweilige Identifizierungsentität 309, 313 zwecks Identifizierung des Kommunikationsendgerätes 301 übermitteln.

Das erste Subnetzwerk 307 kann ein Default-Subnetzwerk sein. Die Basisstation kann die Verbindungsanfrage des Kommunikationsendgerätes 301 empfangen und an die erste Identifizierungsentität 309 weiterleiten, falls die Verbindungsanfrage keine Subnetzwerk-Kennung 306, welche ein Subnetzwerk 307, 311 identifiziert, aufweist.

Im Folgenden wird ein beispielhafter Kommunikationsaufbau beschrieben, wie er im Kommunikationssystem 300 über das Kommunikationsnetzwerk 303 erfolgen kann.

Die erste Identifizierungsentität 309 des ersten Subnetzwerkes 307, welches beispielsweise als Default-Subnetz mit Default-Identifizierungsentität dem Kommunikationsendgerät 301 zugeordnet ist, empfängt eine Identifikation 302 des Kommunikationsendgerätes 301. Diese Identifikation 302 identifiziert das Kommunikationsendgerät 301. Auf der Basis dieser Identifikation 302 identifiziert die erste Identifizierungsentität 309 das Kommunikationsendgerät 301. Die Aufgaben dieser ersten Identifizierungsentität 309 können dabei denjenigen einer MME (Mobility Management Entity) im LTE-Netz entsprechen bzw. diese umfassen. Die Identifizierung kann anhand einer IMSI oder eines damit verknüpften temporären Identifizierungsmerkmals des Kommunikationsendgeräts 301, beispielsweise eines UE erfolgen.

Danach wird von der Management-Entität 319 ein Subnetzwerk auf der Basis der Zuordnung 321 einer Subnetzwerk-Kennung 306 zu dem Kommunikationsendgerät 301 zugeordnet.

Es folgt das Aufbauen einer Kommunikationsverbindung 308 des Kommunikationsendgerätes 301 über das erste Subnetzwerk 307, falls die der Identifikation 302 des Kommunikationsendgerätes 301 zugeordnete Subnetzwerk-Kennung 306 der Subnetzwerk-Kennung 312 des ersten Subnetzwerkes 307 entspricht. Alternativ folgt das Aufbauen einer Kommunikationsverbindung 310 des Kommunikationsendgerätes 301 über das zweite Subnetzwerk 311 bzw. über ein anderes der Subnetzwerke, beispielsweise einer Kommunikationsverbindung 318 über das n-te Subnetzwerk 315, falls die der übermittelten Identifikation 302 zugeordnete Subnetzwerk-Kennung 306 und die Subnetzwerk-Kennung 312 des ersten Subnetzwerkes 307 unterschiedlich sind oder falls die der übermittelten Identifikation 302 zugeordnete Subnetzwerk-Kennung 306 der Subnetzwerk-Kennung 312 des zweiten Subnetzwerkes 311 bzw. des n-ten Subnetzwerkes 315 entspricht.

Die Aufgaben der Management-Entität 319 können dabei denjenigen eines HSS (Home Subscriber Server) im LTE (Long Term Evolution)-Netz entsprechen bzw. diese umfassen, d.h. die folgende Prozedur zum Verbindungsaufbau kann im Kommunikationsnetzwerk 303 ablaufen.

Zunächst erstellt die Management-Entität 319 Parameter, die für die Authentifizierung und in weiterer Folge für sicherheitsrelevante Abläufe, wie Verschlüsselung und Schutz der Integrität der Nachrichten, benötigt werden. Diese können ein zufälliger Wert RAND, ein Schlüssel K_{ASME}, das erwartete Ergebnis der Authentifizierungsüberprüfung XRES, sowie der Authentication Token AUTN sein. Diese 4 Parameter können als sogenannter Authentication Vector von der Management-Entität 319 an das entsprechende Subnetzwerk 307 geschickt werden.

RAND und AUTN können von der ersten Identifizierungsentität 309, beispielsweise über einen (nicht dargestellten) ersten Kommunikationsknoten, z.B. einen eNodeB (Basisstation) an das Kommunikationsendgerät 301, beispielsweise ein UE (User Equipment) gesendet werden. Der erste Kommunikationsknoten kann dabei zwischen Kommunikationsendgerät 301 und ersten Subnetzwerk 307 angeordnet sein, um eine Kommunikation des Kommunikationsendgeräts 301 zu der ersten Identifizierungsentität 309 zu ermöglichen. Ferner kann der erste Kommunikationsknoten mit weiteren Subnetzwerken 311,315 verbunden sein, um eine Kommunikation des Kommunikationsendgerätes 301 zu weiteren Subnetzwerken 311, 315 zu ermöglichen. Der erste Kommunikationsknoten kann von dem Kommunikationsendgerät 301 beispielsweise über RAT (Radio Access Technology), z.B. WLAN, WiFi, Mobilfunk-Luftschnittstelle, etc. erreicht werden.

Das Kommunikationsendgerät 301 kann von einem auf der UICC gespeicherten geheimen Schlüssel ebenso einige Parameter, wie z.B. den K_{ASME}, ableiten, die es ihm erlauben, mithilfe des AUTN die Authentizität des Kommunikationsnetzes 303 zu überprüfen und aus RAND und K_{ASME} über einen bestimmten Algorithmus den Wert RES zu errechnen. Dieser Wert kann dann, beispielsweise über den ersten Kommunikationsknoten, zur ersten Identifizierungsentität 309 geschickt werden. Sind RES und XRES gleich, schickt die erste Identifizierungsentität 309 eine Nachricht an die Management-Entität 319, um dieser mitzuteilen, dass die Authentifizierung des Kommunikationsendgeräts 301 positiv abgeschlossen wurde. Die Management-Entität kann darauf hin eine Liste für dieses Kommunikationsendgerät 301 mit erlaubten Verbindungen (PDN Subscription Contexts mit QoS profiles) an die erste Identifizierungs-Entität 309 schicken.

Daraufhin kann die erste Identifizierungs-Entität 309 einen Default Träger (beispielsweise eine IP Verbindung) vom Kommunikationsendgerät 301 aufbauen, beispielsweise über ein Serving-Gateway (S-GW) zu eine Packet Data Network-Gateway (PDN-GW) und das Kommunikationsendgerät 301 über den erfolgreichen Einbuchungsvorgang informieren.

Nun kann das Kommunikationsendgerät 301 über das Kommunikationsnetzwerk 303 kommunizieren. Weitere Verbindungsanforderungen vom PDN-GW oder Kommunikationsendgerät 301 für zusätzliche Träger oder Modifikationen der bestehenden Träger können von der ersten Identifizierungs-Entität 309 auf Basis der von der Management-Entität 319 empfangenen Daten autorisiert werden.

Die Kommunikationsverbindung 310 kann über das zweite Subnetzwerk 311 aufgebaut werden, falls die der übermittelten Identifikation 302 zugeordnete Subnetzwerk-Kennung 306 die Subnetzwerk-Kennung 314 des zweiten Subnetzwerkes 311 ist.

Alternativ kann die Kommunikationsverbindung 310 über das n-te Subnetzwerk 315 aufgebaut werden, falls die der übermittelten Identifikation 302 zugeordnete Subnetzwerk-Kennung 306 die Subnetzwerk-Kennung 316 des n-ten Subnetzwerkes 315 ist.

Das Kommunikationsnetzwerk 303 kann ein Netzwerk einer fünften Generation (5G) oder einer weiteren Generation sein, und die Subnetzwerke 307, 311, 315 können Slices des Kommunikationsnetzwerkes 303 sein, wie oben zu den Figuren 1 und 2 beschrieben.

Die Management-Entität 319 kann die Zuordnung 321 der Subnetzwerk-Kennung 306 zu dem Kommunikationsendgerät 301 auf der Basis einer oder mehrerer der folgenden Zuordnungen bewirken: einer Zuordnung der Identifikation 302 des Kommunikationsendgerätes 301, beispielsweise einer Hardware-Kennung des Kommunikationsendgerätes 301 wie IMSI oder IMEI oder eID zu der Subnetzwerk-Kennung 306 und/oder einer Zuordnung eines Kommunikationsdienstes zu dem Kommunikationsendgerät 301 und/oder einer Zuordnung einer Softwareanwendung zu dem Kommunikationsendgerät 301 und/oder eines Betriebssystems des Kommunikationsendgeräts 301 zu einem der beiden Subnetzwerke 307, 311.

Subnetzwerke können unterschiedlichen Anwendungen oder Diensten zugeordnet sein, sodass das Kommunikationsendgerät 301 in weiterer Abhängigkeit hiervon über mehrere Subnetzwerke 307, 311, 315 kommunizieren kann. Die Subnetzwerke können sich voneinander durch unterschiedliche Funktionen, Dienste oder Anwendungen unterscheiden.

Neben der Zuordnung von Kommunikationsendgerät(en) 301 zu Subnetzwerkkennung kann die Management-Entität 319 auch eine Zuordnung von Subnetzwerk-Kennungen 312, 314, 316 zu Subnetzwerken 307, 311, 315 umfassen, die beispielsweise in einer Tabelle bzw. einem Speicher der Management-Entität 319 gespeichert sein können.

Das Kommunikationsendgerät 301 kann die Identifikation 302 des Kommunikationsendgerätes 301 zu der ersten 309 oder der zweiten 313 Identifizierungsentität zusammen mit der Subnetzwerk-Kennung 306, welche das dem Kommunikationsendgerät 301 zugeordnete Subnetzwerk 307, 311, 315 anzeigt, an die erste Identifizierungsentität 309 oder die anderen Identifizierungsentitäten 313, 317 übermitteln. Die erste Identifizierungsentität 309 kann darauf die Identifikation 302 des Kommunikationsendgerätes 301 und die Subnetzwerk-Kennung 312 des ersten Subnetzes 307 an die Management-Entität 319 übermitteln. Die gleiche Funktionalität gilt auch für die anderen Identifizierungsentitäten 313, 317.

Beim Zuordnen eines Subnetzwerkes zu dem Kommunikationsendgerät 301 kann die Management-Entität 319 die der Identifikation 302 des Kommunikationsendgerätes 301 zugeordnete Subnetzwerk-Kennung 306 an die erste Identifizierungsentität 309 übermitteln. Falls die der Identifikation 302 des Kommunikationsendgerätes 301 zugeordnete Subnetzwerk-Kennung 306 und die Subnetzwerk-Kennung 312 des ersten Subnetzwerkes 307 unterschiedlich sind, kann die erste Identifizierungsentität 309 die übermittelte Subnetzwerk-Kennung 306 an das Kommunikationsendgerät 301 übermitteln. Falls die der Identifikation 302 des Kommunikationsendgerätes 301 zugeordnete Subnetzwerk-Kennung 306 und die Subnetzwerk-Kennung 312 des ersten Subnetzwerkes 307 unterschiedlich sind, kann die erste Identifizierungsentität 309 die übermittelte Subnetzwerk-Kennung 306 an die zweite Identifizierungsentität 313 übermitteln.

Beim Aufbauen der Kommunikationsverbindung 310 über das zweite Subnetzwerk 311 kann das Kommunikationsendgerät 301 die Identifikation 302 an die zweite Identifizierungsentität 313 übermitteln.

Beim Aufbauen der Kommunikationsverbindung 310 über das zweite Subnetzwerk 311 kann die zweite Identifizierungsentität 313 das Kommunikationsendgerät 301 auf der Basis der Identifikation 302 des Kommunikationsendgerätes 301 identifizieren. Nach erfolgter Identifikation des Kommunikationsendgerätes 301 können die folgenden Schritte ausgeführt werden: Zuordnen eines Subnetzwerkes 307, 311, 315 zu dem Kommunikationsendgerät 301 durch die Management-Entität 319 auf der Basis der Zuordnung 321 einer Subnetzwerk-Kennung zu dem Kommunikationsendgerät 301; und Aufbauen einer Kommunikationsverbindung 310 des Kommunikationsendgerätes über das zweite Subnetzwerk 311, falls die der Identifikation 302 des Kommunikationsendgerätes 301 zugeordnete Subnetzwerk-Kennung 306 der Subnetzwerk-Kennung 314 des zweiten Subnetzwerkes 311 entspricht. Alternativ kann ein Aufbauen einer Kommunikationsverbindung 318 des Kommunikationsendgerätes 301 über ein weiteres Subnetzwerk 315 des Kommunikationsnetzwerkes 303 oder ein Abweisen des Kommunikationsendgerätes 301 erfolgen, falls die der Identifikation 302 des Kommunikationsendgerätes 301 zugeordnete Subnetzwerk-Kennung 306 und die Subnetzwerk-Kennung 314 des zweiten Subnetzwerkes 311 unterschiedlich sind.

Der Verbindungsaufbau kann hier rekursiv erfolgen. D.h. zuerst wird versucht, eine Kommunikation über das erste Subnetzwerk 307 aufzubauen. Falls dies nicht möglich ist aufgrund nicht passender Subnetzwerk-Kennung 306 des Kommunikationsendgerätes 301 wird versucht, eine Kommunikation über das zweite Subnetzwerk 311 aufzubauen. Falls dies auch nicht möglich ist aufgrund nicht passender Subnetzwerk-Kennung 306 des Kommunikationsendgerätes 301 wird versucht, eine Kommunikation über ein weiteres, z.B. das n-te Subnetzwerk 315 aufzubauen. Falls dieser letzte Kommunikationsaufbau aufgrund nicht passender Subnetzwerk-Kennung 306 des Kommunikationsendgerätes 301 nicht möglich ist, wird der Kommunikationsaufbau abgewiesen. Alternativ kann der Kommunikationsaufbau auch schon früher abgewiesen werden, beispielsweise nach dem 1., 2., 3., n-ten nicht erfolgreichen Versuch.

Beim Aufbauen der jeweiligen Kommunikationsverbindung 308, 310, 318 kann das Kommunikationsendgerät 301 die der übermittelten Identifikation 302 zugeordnete Subnetzwerk-Kennung 306 an die erste 309 oder zweite 313 Identifizierungsentität übermitteln.

Die jeweilige Identifizierungsentität 309, 313 oder die Management-Entität 319 kann ein Subnetzwerk 307, 311, 315 des Kommunikationsnetzes 303 dem Kommunikationsendgerät 301 auf der Basis der übermittelten Subnetzwerk-Kennung 306 zuordnen, falls die übermittelte Subnetzwerk-Kennung 306 ein Subnetzwerk eines anderen Kommunikationsnetzwerkes, beispielsweise eines Fremdnetzes, anzeigt. Dabei kann die jeweilige Identifizierungsentität 309, 313 bzw. die Management-Entität 319 dasjenige Subnetzwerk 307, 311, 315 des Kommunikationsnetzes 303 dem Kommunikationsendgerät 301 zuordnen, das dem Subnetzwerk des anderen Kommunikationsnetzes entspricht. Die Subnetzwerke in unterschiedlichen Kommunikationsnetzen können unterschiedliche Kennungen haben. Bei einer entsprechenden Zuordnung des Subnetzes im Kommunikationsnetzwerk 303 zu dem Kommunikationsendgerät 301, das dem entsprechenden Subnetz im anderen Netz entspricht, d.h. beispielsweise dem Subnetz im anderen Netz, das die gleichen Dienste bietet, kann das Roaming in Fremdnetzen erleichtert werden. Diese Zuordnung kann beispielsweise über Look-Up Tabellen erfolgen, die in der jeweiligen Identifizierungsentität 309, 313 oder der Management-Entität 319 abgelegt oder gespeichert sein können.

Die Kommunikationsverbindung 308 über das erste Subnetzwerk 307 kann durch die erste Identifizierungsentität 309 aufgebaut werden; die Kommunikationsverbindung 310 über das zweite Subnetzwerk 311 kann durch die zweite Identifizierungsentität 313 aufgebaut werden. Die Kommunikationsverbindung 318 über das n-te Subnetzwerk 315 kann durch die n-te Identifizierungsentität 317 aufgebaut werden. Alternativ können diese Kommunikationsverbindungen 308, 310, 318 auch mit Hilfe des Kommunikationsendgerätes 301 aufgebaut werden.

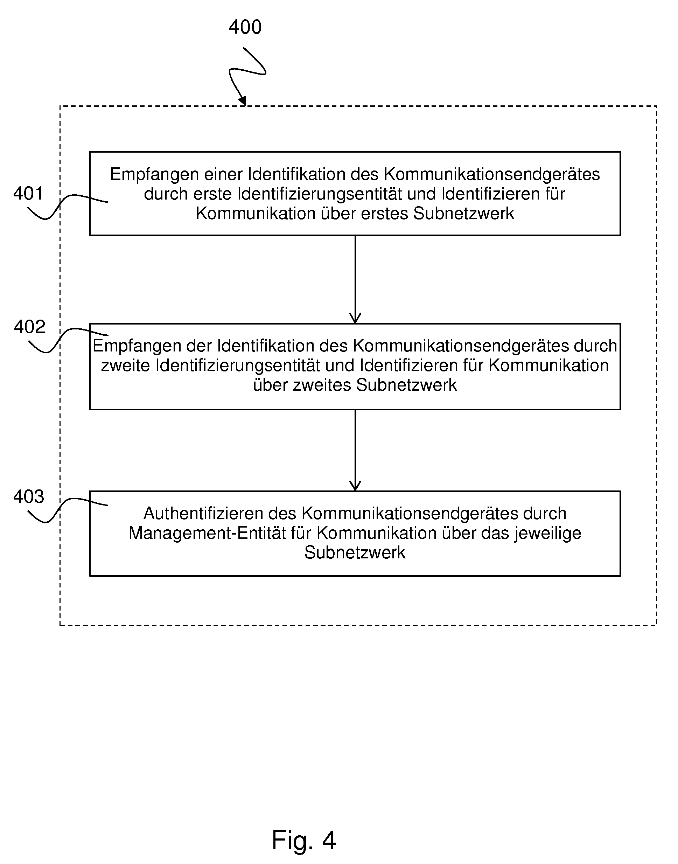

Fig. 4 zeigt eine schematische Darstellung eines Verfahrens 400 zur Kommunikation in einem Kommunikationsnetzwerk mit einer Mehrzahl von Subnetzwerken gemäß einer beispielhaften Ausführungsform.

Das Kommunikationsnetzwerk kann dem oben zu Figur 3 beschriebenen Kommunikationsnetzwerk 303 entsprechen. D.h., das Kommunikationsnetzwerk 303 umfasst eine Mehrzahl von Subnetzwerken 307, 311,315 mit einem ersten Subnetzwerk 307 und einem zweiten Subnetzwerk 311. In dem ersten Subnetzwerk 307 ist eine erste Identifizierungsentität 309 zur Identifizierung des Kommunikationsendgerätes 301 angeordnet und in dem zweiten Subnetzwerk 311 ist eine zweite Identifizierungsentität 313 zur Identifizierung des Kommunikationsendgerätes 301 angeordnet. Jedem Subnetzwerk 307, 311, 315 des Kommunikationsnetzwerkes 303 ist eine Subnetzwerk-Kennung zugeordnet. In dem Kommunikationsnetzwerk 303 ist eine Management-Entität 319 angeordnet, welche eine Zuordnung 321 des Kommunikationsendgerätes 301 zu einem der beiden Subnetzwerke 307, 311 verwaltet.

Das Verfahren 400 umfasst ein Empfangen 401 einer Identität 302 eines Kommunikationsendgeräts 301 durch eine erste Identifizierungsentität 309, welche einem ersten Subnetzwerk 307 zugeordnet ist, und ein Identifizieren des Kommunikationsendgeräts 301 auf der Basis der Identität 302 für die Kommunikation über das erste Subnetzwerk 307.

Das Verfahren 400 umfasst ferner ein Empfangen 401 der Identität 302 des Kommunikationsendgeräts 301 durch eine zweite Identifizierungsentität 313, welche einem zweiten Subnetzwerk 311 zugeordnet ist, und ein Identifizieren des Kommunikationsendgeräts 301 auf der Basis der Identität 302 für die Kommunikation über das zweite Subnetzwerk 311.

Das Verfahren 400 umfasst ferner ein Authentifizieren des Kommunikationsendgeräts 301 für die Kommunikation über das jeweilige Subnetzwerk 307, 311 durch eine Management-Entität 319.

Das Verfahren 400 kann ferner folgendes umfassen: Übermitteln der Identität 302 an die Management-Entität 319 durch die jeweilige Identifizierungsentität 309, 313; und Authentifizieren des Kommunikationsendgeräts 301 auf der Basis der übermittelten Identität 302 durch die Management-Entität 319.

Das Verfahren 400 kann ferner folgendes umfassen: Authentifizieren des Kommunikationsendgeräts 301 anhand einer Zuordnung 321 von Subnetzwerken 307, 311, 315 des Kommunikationsnetzwerkes 303 zu Kommunikationsendgeräten 301 durch die Management-Entität 319, insbesondere anhand einer Zuordnung 321 von Subnetzwerken 307, 311, 315 zu Identitäten 302 von Kommunikationsendgeräten 301.

Das Verfahren 400 kann ferner folgendes umfassen: Authentifizieren des Kommunikationsendgeräts 301 für die Kommunikation über das erste Subnetzwerk 307 durch die Management-Entität 319, falls das erste Subnetzwerk 307 der Identität des Kommunikationsendgerätes 301 zugeordnet ist, oder Authentifizieren des Kommunikationsendgeräts 301 für die Kommunikation über das zweite Subnetzwerk 311 durch die Management-Entität 319, falls das zweite Subnetzwerk 311 der Identität 302 des Kommunikationsendgerätes 301 zugeordnet ist.

Das Verfahren 400 kann ferner folgendes umfassen: Übermitteln einer Subnetzwerk-Kennung 314 der zweiten Identifizierungsentität 313 an die erste Identifizierungsentität 309 durch die Management-Entität 319, falls das Kommunikationsendgerät 301 für die Kommunikation über das zweite Subnetzwerk 311 authentifiziert ist, oder Übermitteln einer Subnetzwerk-Kennung 312 der ersten Identifizierungsentität 309 an die zweite Identifizierungsentität 313 durch die Management-Entität 319, falls das Kommunikationsendgerät 301 für die Kommunikation über das erste Subnetzwerk 307 authentifiziert ist.

Das Verfahren 400 kann ferner folgendes umfassen: Übermitteln der von der Management-Entität 319 übermittelten Subnetzwerk-Kennung 314 des zweiten Subnetzwerkes 311 durch die erste Identifizierungsentität 309 an das Kommunikationsendgerät 301 oder an die zweite Identifizierungsentität 313; oder Übermitteln der von der Management-Entität 319 übermittelten Subnetzwerk-Kennung 312 des ersten Subnetzwerkes 307 durch die zweite Identifizierungsentität 313 an das Kommunikationsendgerät 301 oder an die erste Identifizierungsentität 309.

Das Verfahren 400 kann ferner folgendes umfassen: Zuordnen des Kommunikationsendgeräts 301 auf der Basis zumindest einer der folgenden Zuordnungen der Subnetzwerk-Kennung 312, 314 durch die Management-Entität 319: einer Zuordnung der Identifikation 302 des Kommunikationsendgerätes 301, insbesondere einer Hardware-Kennung des Kommunikationsendgerätes 301 wie IMSI oder IMEI oder eID zu der Subnetzwerk-Kennung 312, 314, und/oder einer Zuordnung eines Kommunikationsdienstes zu dem Kommunikationsendgerät 301 und/oder einer Zuordnung einer Softwareanwendung zu dem Kommunikationsendgerät 301, und/oder eines Betriebssystems des jeweiligen Kommunikationsendgerätes 301 zu einem der beiden Subnetzwerke 307, 311.

Das Kommunikationsnetzwerk 303 kann ein Netzwerk einer fünften Generation (5G) oder einer weiteren Generation sein wie oben zu den Figuren 1 und 2 beschrieben. Das erste Subnetzwerk 307 und das zweite Subnetzwerk 311 können Slices des Kommunikationsnetzwerkes 303 sein, wie oben zu Figur 2 und 3 beschrieben.

Das Verfahren 400 kann ferner folgendes umfassen: Empfangen einer Subnetzwerk-Kennung 306 von dem Kommunikationsendgerät 301 durch die jeweilige Identifizierungsentität 309, 313 und Zuordnen desjenigen Subnetzwerks zu dem Kommunikationsendgerät 301, das der empfangenen Subnetzwerk-Kennung 306 zugeordnet ist oder einem durch die empfangene Subnetzwerk-Kennung 306 angezeigtem Subnetzwerk entspricht. Damit wir ein Roaming effizient ermöglicht.

Das Verfahren 400 kann ferner folgendes umfassen: Aufbauen der Kommunikation des Kommunikationsendgerätes 301 über das erste Subnetzwerk 307 durch die erste Identifizierungsentität 309, falls das Kommunikationsendgerät 301 für die Kommunikation über das erste Subnetzwerk 307 authentifiziert ist, und Aufbauen der Kommunikation des Kommunikationsendgerätes 301 über das zweite Subnetzwerk 311 durch die zweite Identifizierungsentität 313, falls das Kommunikationsendgerät 301 für die Kommunikation über das zweite Subnetzwerk 311 authentifiziert ist.

Das Verfahren 400 kann ferner folgendes umfassen: Autorisieren des Kommunikationsendgeräts 301 für die Kommunikation durch die jeweilige Identifizierungsentität 309, 313; Aufbauen oder Modifizieren eines Kommunikations-Bearers für die Kommunikation, Nachführen eines Kommunikations-Bearers bei einer Änderung einer Netzwerkentität des jeweiligen Subnetzwerkes 307, 311 und Übergabe der Kommunikation an eine weitere Identifizierungsentität des gleichen Subnetzwerkes des Kommunikationsnetzwerkes.

Das Verfahren 400 kann ferner folgendes umfassen: Verwalten eines Aufenthaltsorts des Kommunikationsendgerätes 301 durch die jeweilige Identifizierungsentität 309, 313.

Das Verfahren 400 kann ferner folgendes umfassen: Empfangen einer Verbindungsanfrage mit der Identifikation 302 von dem Kommunikationsendgerät 301 durch eine Basisstation und Übermitteln der Identifikation 302 an die jeweilige Identifizierungsentität 309, 313 zwecks Identifizierung des Kommunikationsendgerätes 301, wobei die erste Identifizierungsentität 309 und die zweite Identifizierungsentität 313 mit der Basisstation kommunikationstechnisch verbunden sind. Die Basisstation kann dabei dem ersten Kommunikationsknoten entsprechen, wie oben in Fig. 3 beschrieben.

Das Verfahren 400 kann ferner folgendes umfassen: Empfangen der Verbindungsanfrage des Kommunikationsendgeräts durch die Basisstation und Weiterleiten der Verbindungsanfrage an die erste Identifizierungsentität 309, falls die Verbindungsanfrage keine Subnetzwerk-Kennung 306, welche ein Subnetzwerk 307, 311 identifiziert, aufweist, wobei das erste Subnetzwerk 307 ein Default-Subnetzwerk ist.

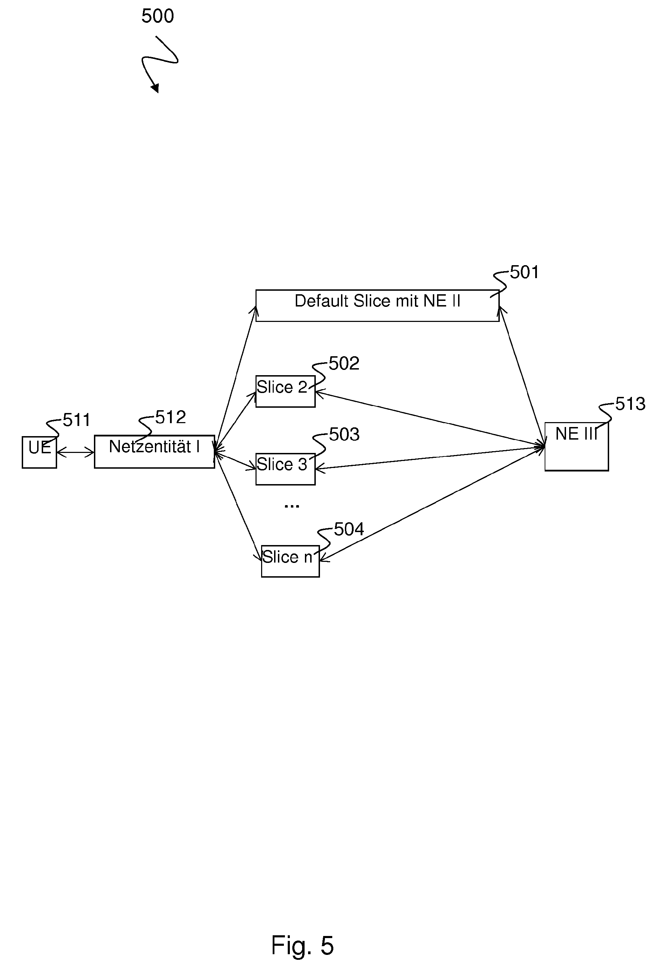

Fig. 5 zeigt eine schematische Darstellung des Einbuchungsvorgangs eines Kommunikationsendgerätes in ein Kommunikationsnetz am Beispiel eines 5G-Netzes 500 gemäß einer beispielhaften Ausführungsform. Das 5G-Netz 500 umfasst ein UE 511, eine erste Netzentität 512 bzw. Netzwerkentität, eine Mehrzahl von Slices 501, 502, 503, 504, denen jeweils eine zweite Netzentität zugeordnet ist, und eine dritte Netzentität 513. Das UE (User Equipment) ist ein Beispiel eines wie oben zu den Figuren 3 und 4 beschriebenen Kommunikationsendgeräts 301. Die erste Netzentität 512 kann dem oben zu Figur 3 beschriebenen ersten Kommunikationsknoten entsprechen. Es kann sich dabei beispielsweise um einen eNodeB bzw. eine Basisstation handeln. Die Slices 501, 502, 503, 504 können den oben zu Figuren 3 und 4 beschriebenen Subnetzwerken 307, 311, 315 entsprechen oder den zu Figur 2 beschriebenen Netzwerk Slices 210b, 211 b, 212b oder Instanzen 210a, 211 a, 212a dieser Netzwerk Slices entsprechen. Die erste Slice 501 ist hier beispielhaft als Default Slice beschrieben. Natürlich kann auch jede andere der Slices 502, 503, 504 als Default Slice spezifiziert sein. Die dritte Netzentität 513 kann der oben zu Figur 3 und 4 beschriebenen Netzwerkentität 319 entsprechen. Sie kann beispielsweise in der in Figur 1 beschriebenen Management & Instrumentierungsebene 106 angeordnet sein. Die dritte Netzentität 513 kann unter anderen auch die Aufgaben eines HSS gemäß LTE Terminologie wahrnehmen. Die jeweiligen zweiten Netzentitäten, die den Slices 501, 502, 503, 504 zugeordnet sind, können unter anderen auch die Aufgaben einer MME gemäß LTE Terminologie wahrnehmen.

In einer Ausführungsform ist die Struktur des 5G-Netzes 500 ähnlich der Struktur eines LTE-Netzes. Allerdings hat das Heimatnetz mehrere Subnetze 501, 502, 503, 504, welche als Slices bezeichnet werden. Das UE ist somit nicht nur dem Heimatnetz (über die dritte Netzentität 513, vergleichbar dem HSS), sondern auch dem jeweiligen Slice zugeordnet. Die zweiten Netzentitäten können in Analogie zu einem MME gemäß LTE-Terminologie zugleich Teil des Default-Slices 501 sein, was von der genauen Funktion abhängig ist. Die Subnetze 501, 502, 503, 504 können dann jeweils eine Verbindung zur dritten Netzentität 513 in Analogie zu dem HSS gemäß LTE haben, wie hier in Figur 5 dargestellt.

Im Folgenden wird ein beispielhafter Einbuchungsvorgang in das 5G Netz 500 beschrieben.

Das UE 511 verbindet sich über die erste Netzentität 512 mit der zweiten Netzentität des Default Slice 501. Die zweite Netzentität des Default Slice 501 identifiziert das UE 511 anhand der IMSI oder eines damit verknüpften temporären Identifizierungsmerkmals und leitet die Anforderung des UE 511 sich ins Netz einzubuchen zur dritten Netzentität 513.

Zunächst erstellt die dritte Netzentität 513 Parameter, die für die Authentifizierung und in weiterer Folge für sicherheitsrelevante Abläufe, wie Verschlüsselung und Schutz der Integrität der Nachrichten, benötigt werden. Diese sind ein zufälliger Wert RAND, ein Schlüssel K_{ASME}, das erwartete Ergebnis der Authentifizierungsüberprüfung XRES, sowie der Authentication Token AUTN. Diese 4 Parameter werden als sogenannter Authentication Vector bzw. Authentifizierungsvektor von der dritten Netzentität 513 an die zweite Netzentität des Default Slice 501 geschickt.RAND und AUTN werden von der zweiten Netzentität des Default Slice 501 über die erste Netzentität 512 an das UE 511 gesendet. Das UE 511 kann von einem auf der UICC gespeicherten geheimen Schlüssel ebenso einige Parameter, wie z.B. den K_{ASME}, ableiten, die es ihm erlauben, mithilfe des AUTN die Authentizität des Netzes zu überprüfen und aus RAND und K_{ASME} über einen bestimmten Algorithmus den Wert RES zu errechnen. Dieser Wert wird über die erste Netzentität 512 zur zweiten Netzentität der Default Slice 501 geschickt. Sind RES und XRES gleich, schickt die zweite Netzentität der Default Slice 501 eine Nachricht an die dritte Netzentität 513, um dieser mitzuteilen, dass die Authentifizierung des UE 511 positiv abgeschlossen wurde. Die dritte Netzentität 513 schickt daraufhin eine Liste für dieses UE 511 erlaubter Verbindungen, z.B. PDN (Packet Data Network) Subscription Contexts mit QoS (Quality of Service) Profilen, an die zweite Netzentität der Default Slice 501.

Daraufhin baut die zweite Netzentität des Default Slice 501 einen Default Bearer bzw. Träger (z.B. eine IP Verbindung) vom UE 511 zu beispielsweise einem PDN-GW über beispielsweise ein S-GW auf und informiert das UE 511 über den erfolgreichen Einbuchungsvorgang. Nun kann das UE 511 über das Kommunikationsnetzwerk kommunizieren. Weitere Verbindungsanforderungen vom PDN-GW oder UE 511 für zusätzliche Bearer oder Modifikationen der bestehenden Bearer können von der zweiten Netzentität der Default Slice 501 auf Basis der von der dritten Netzentität 513 empfangenen Daten autorisiert werden.

Alle Subnetze (Slices) 501, 502, 503, 504 sind vordefiniert sowohl hinsichtlich der Subnetzstruktur (d.h. welche Funktionalitäten vorhanden sind, welche Netztopologie definiert ist) als auch hinsichtlich der Funktionalität.

Die Netzentitäten II (auf Default Slice 501) und III 513 sind der Control Plane zugeordnet. Die Netzentität I 512 ist sowohl Control Plane als auch User Plane zugeordnet, beispielsweise kann die Signalisierung zwischen Netzentität I 512 und Netzentität II (auf Default Slice 501) auf der Control Plane (CP) laufen, während die Nutzerdaten zwischen Netzentität I 512 und S-GW und PDN-GW auf der User Plane (UP) laufen können. Die Subnetze 501, 502, 503, 504 laufen logisch in der Netzentität III 513 zusammen. Für die Netzentität II gibt es mehrere Möglichkeiten: Falls der Funktionsumfang ähnlich der MME gemäß LTE Terminologie ist, dann ist Netzentität II ein Teil des Default-Slices 501, wie in Figur 5 dargestellt. In jedem Fall gibt es den folgenden 2-stufigen Prozess:
a) Das UE 511 versucht sich einzubuchen, wird wie oben beschrieben von Netzentität II und III 513 voll authentifiziert und entweder einem anderen Slice zugewiesen oder im Default-Slice 501 belassen. Dieser Default Slice 501 kann in einer Ausgestaltung ein Standard Multimedia Broadband Netz sein.
b) Wenn das UE 511 einem anderen Slice zugewiesen wird, wiederholt die Netzentität I 512 den Einbuchungsvorgang in Richtung des zugewiesenen Slice (und der Netzentität II darin) und das UE 511 wird bei Erfolg aus dem Default-Slice 501 abgemeldet.

Dies kann vom Ablauf beispielsweise einem Tracking Area Update gemäß LTE Terminologie entsprechen, also dem Verfahren, das durchgeführt wird, wenn das UE 511 vom Bereich eines MME/S-GW in den eines anderen MME/S-GWs kommt, wobei aber die Netzentität I 512 im Unterschied dazu (wo der eNodeB eines Netzes nur mit einem MME verbunden ist) aufgrund der Subnetz Kennung eine andere Netzentität II auswählen kann.

In einer Implementierungsform kann man es in a) oder b) oder in a) und b) zu einer Authentifizierung des UE 511 kommen. Dies kann etwa ähnlich dem oben beschriebenen Tracking Area Update gestaltet werden.

In einer Implementierungsform besitzt die Netzentität II nur die Funktionalität, die notwendig ist um mit der Netzentität III 513 den Slice zu bestimmen. Dann ist sie nicht Teil des Default-Slices und es erfolgt immer ein Schritt b).

Die Netzentität III 513 identifiziert anhand beispielsweise der IMSI das UE 511 und ordnet dem UE 511 den dazugehörigen Slice, beispielsweise Subnetz I 501 zu. Die Zuweisung des Slice erfolgt aufgrund der in der Netzentität III gespeicherten Daten sowie ggf. unter Einbeziehung von Parametern, die beim Einbuchen vom UE 511 an die Netzentität II übertragen werden. Das können Hardwarekennungen sein (z.B. die IMEI), Operating System Infos oder Applikations-IDs.

In einer alternativen Variante übermittelt das UE 511 die Kennung des entsprechenden Subnetzes im zweiten Schritt b). Das ist die Kennung, die es im ersten Schritt a) von Netzentität III über Netzentität II bekommen hat. Daraufhin wiederholt das UE 511 in Schritt b) den Einbuchungsvorgang in Richtung des zugewiesenen Slice. D.h. in dieser Alternative laufen die Slices im UE 511 zusammen, nicht in Netzentität I 512.

In dieser alternativen Variante kann das UE 511 dann statt der eigenen ID (z.B. IMSI) die eigene ID mit der Slice ID in jedem Verbindungsaufbau mitgeben. Damit kann dann immer die richtige Netzentität II gewählt werden, die Netzentität I 512 muss keinen Status zum UE 511 speichern und das UE 511 kann auch Teil von mehreren Slices sein. Das vereinfacht auch die Prozeduren bei einem Wechsel der Netzentität I 512.

In einer weiteren alternativen Variante übermittelt das UE 511 die Kennung des Subnetzes von Anfang an. Das Subnetz kann beispielsweise ein S-GW (analog), ein PDN-GW (analog) etc. enthalten. Diese Netzentitäten werden für das UE 511 parametriert. Das erfolgt über die Netzentität II bei Bedarf - wenn z.B. ein neuer Bearer aufgebaut wird.

Nach erfolgter Zuweisung des Slices und Einbuchen im selbigen ist die Netzentität II, die als erster Kontaktpunkt für das Einbuchen gedient hat, nicht mehr in den Signalisierungsfluss eingebunden (außer das UE 511 bleibt im Default-Slice 501 und Netzentität II ist Teil des Default-Slices 501).

Nach der Parametrisierung kann das UE 511 über das Subnetz I 501 beispielsweise im Internet kommunizieren oder sich im IMS registrieren und Telekommunikations-Dienste nutzen (z.B. Telefonie).

Die Subnetze I bis n 501, 502, 503, 504 sind voneinander entkoppelt.

Das obige Konzept gilt analog für die Einbuchung in einem fremden Netz. Hier übernimmt analog die Netzentität III die Auswahl des Subnetzes und die Parameter. Im fremden Netz wird die Netzentität II im besuchten Netz dasjenige vordefinierte Subnetz des fremden Netzes auswählen, das dem Heimat-Subnetz entspricht (beispielsweise über Look-Up-Tabelle).

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 400 oder die zu den Figuren 3 und 5 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 auszuführen oder die Netzkomponenten der in den Figuren 1 bis 5 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste
- 300:: Kommunikationssystem
- 301:: Kommunikationsendgerät, z.B. UE
- 302:: Identifikation des Kommunikationsendgeräts
- 303:: Kommunikationsnetzwerk
- 304:: Verbindung zwischen 1. Subnetzwerk und Management-Entität
- 305:: Kommunikationsschnittstelle
- 306:: Subnetzwerkkennung des Kommunikationsendgeräts
- 307:: 1. Subnetzwerk
- 308:: Verbindungsaufbau über 1. Subnetzwerk
- 309:: 1. Identifizierungsentität
- 310:: Verbindungsaufbau über 2. Subnetzwerk
- 311:: 2. Subnetzwerk
- 312:: 1. Subnetzwerkkennung
- 313:: 2. Identifizierungsentität
- 314:: 2. Subnetzwerkkennung
- 315:: n. Subnetzwerk
- 316:: n. Subnetzwerkkennung
- 317:: n. Identifizierungsentität
- 318:: Verbindungsaufbau über n. Subnetzwerk
- 319:: Management-Entität
- 321:: Zuordnung Kommunikationsendgerät zu Subnetzwerkkennung

- 400:: Verfahren zum Aufbauen einer Kommunikationsverbindung
- 401:: erster Schritt: Empfangen über 1. Subnetzwerk
- 402:: zweiter Schritt: Empfangen über 2. Subnetzwerk
- 403:: dritter Schritt: Authentifizieren

- 500:: 5G Kommunikationsnetz
- 501:: Default Slice mit Netzentität II bzw. zweiter Netzentität
- 502:: Slice 2
- 503:: Slice 3
- 504:: Slice n
- 511:: UE bzw. Kommunikationsendgerät
- 512:: erste Netzentität bzw. Netzentität I
- 513:: dritte Netzentität bzw. Netzentität III

## Patentansprüche

1. Kommunikationssystem (300) für die Kommunikation in einem Kommunikationsnetzwerk (303), wobei das Kommunikationsnetzwerk (303) ein erstes Subnetzwerk (307) und ein zweites Subnetzwerk (311) aufweist, mit:
einer ersten Identifizierungsentität (309), welche dem ersten Subnetzwerk (307) zugeordnet und ausgebildet ist, eine Identität (302) eines Kommunikationsendgeräts (301) zu empfangen, und das Kommunikationsendgerät (301) auf der Basis der Identität (302) für die Kommunikation über das erste Subnetzwerk (307) zu identifizieren;
einer zweiten Identifizierungsentität (313), welche dem zweiten Subnetzwerk (311) zugeordnet und ausgebildet ist, die Identität (302) des Kommunikationsendgeräts (301) zu empfangen, und das Kommunikationsendgerät (301) auf der Basis der Identität (302) für die Kommunikation über das zweite Subnetzwerk (311) zu identifizieren; und
einer Management-Entität (319), welche ausgebildet ist, das Kommunikationsendgerät (301) für die Kommunikation über das jeweilige Subnetzwerk (307, 311) zu authentifizieren.

2. Kommunikationssystem (300) nach Anspruch 1, wobei die jeweilige Identifizierungsentität (309, 313) ausgebildet ist, die Identität (302) an die Management-Entität (319) zu übermitteln, und wobei die Management-Entität (319) ausgebildet ist, das Kommunikationsendgerät (301) auf der Basis der übermittelten Identität (302) zu authentifizieren.

3. Kommunikationssystem (300) nach einem der vorstehenden Ansprüche, wobei die Management-Entität (319) ausgebildet ist, das Kommunikationsendgerät (301) anhand einer Zuordnung (321) von Subnetzwerken (307, 311, 315) des Kommunikationsnetzwerkes (303) zu Kommunikationsendgeräten (301), insbesondere anhand einer Zuordnung (321) von Subnetzwerken (307, 311, 315) zu Identitäten (302) von Kommunikationsendgeräten (301), zu authentifizieren.

4. Kommunikationssystem (300) nach einem der vorstehenden Ansprüche, wobei die Management-Entität (319) ausgebildet ist, das Kommunikationsendgerät (301) für die Kommunikation über das erste Subnetzwerk (307) zu authentifizieren, falls das erste Subnetzwerk (307) der Identität des Kommunikationsendgerätes (301) zugeordnet ist, oder das Kommunikationsendgerät (301) für die Kommunikation über das zweite Subnetzwerk (311) zu authentifizieren, falls das zweite Subnetzwerk (311) der Identität (302) des Kommunikationsendgerätes (301) zugeordnet ist.

5. Kommunikationssystem (300) nach einem der vorstehenden Ansprüche, wobei die Management-Entität (319) ausgebildet ist, der ersten Identifizierungsentität (309) eine Subnetzwerk-Kennung (314) der zweiten Identifizierungsentität (313) zu übermitteln, falls das Kommunikationsendgerät (301) für die Kommunikation über das zweite Subnetzwerk (311) authentifiziert ist, oder der zweiten Identifizierungsentität (313) eine Subnetzwerk-Kennung (312) der ersten Identifizierungsentität (309) zu übermitteln, falls das Kommunikationsendgerät (301) für die Kommunikation über das erste Subnetzwerk (307) authentifiziert ist.

6. Kommunikationssystem (300) nach Anspruch 5, wobei die erste Identifizierungsentität (309) ausgebildet ist, die von der Management-Entität (319) übermittelte Subnetzwerk-Kennung (314) des zweiten Subnetzwerkes (311) dem Kommunikationsendgerät (301) oder der zweiten Identifizierungsentität (313) zu übermitteln, oder wobei die zweite Identifizierungsentität (313) ausgebildet ist, die von der Management-Entität (319) übermittelte Subnetzwerk-Kennung (312) des ersten Subnetzwerkes (307) dem Kommunikationsendgerät (301) oder der ersten Identifizierungsentität (309) zu übermitteln.

7. Kommunikationssystem (300) nach einem der vorstehenden Ansprüche, wobei jedem Subnetzwerk (307, 311) eine Subnetzwerk-Kennung (312, 314) zugeordnet ist (Lookup-Tabelle), und wobei die Management-Entität (319) ausgebildet ist, das Kommunikationsendgerät (301) auf der Basis zumindest einer der folgenden Zuordnungen der Subnetzwerk-Kennung (312, 314) zuzuordnen: einer Zuordnung der Identifikation (302) des Kommunikationsendgerätes (301), insbesondere einer Hardware-Kennung des Kommunikationsendgerätes (301) wie IMSI oder IMEI oder eID zu der Subnetzwerk-Kennung (312, 314), und/oder einer Zuordnung eines Kommunikationsdienstes zu dem Kommunikationsendgerät (301) und/oder einer Zuordnung einer Softwareanwendung zu dem Kommunikationsendgerät (301), und/oder eines Betriebssystems des jeweiligen Kommunikationsendgerätes (301) zu einem der beiden Subnetzwerke (307, 311).

8. Kommunikationssystem (300) nach einem der vorstehenden Ansprüche, wobei das Kommunikationsnetzwerk (303) ein Netzwerk einer fünften Generation (5G) oder einer weiteren Generation ist, und wobei das erste Subnetzwerk (307) und das zweite Subnetzwerk (311) Slices des Kommunikationsnetzwerkes (303) sind.

9. Kommunikationssystem (300) nach einem der vorstehenden Ansprüche, wobei die jeweilige Identifizierungsentität (309, 313) ausgebildet ist, von dem Kommunikationsendgerät (301) eine Subnetzwerk-Kennung (306) zu empfangen und dem Kommunikationsendgerät (301) dasjenige Subnetzwerk (307, 311) des Kommunikationsnetzwerkes (303) zuzuordnen, das der empfangenen Subnetzwerk-Kennung (306) zugeordnet ist oder einem durch die empfangene Subnetzwerk-Kennung (306) angezeigtem Subnetzwerk entspricht.

10. Kommunikationssystem (300) nach einem der vorstehenden Ansprüche, wobei die erste Identifizierungsentität (309) ausgebildet ist, die Kommunikation des Kommunikationsendgerätes (301) über das erste Subnetzwerk (307) aufzubauen, falls das Kommunikationsendgerät (301) für die Kommunikation über das erste Subnetzwerk (307) authentifiziert ist, und wobei die zweite Identifizierungsentität (313) ausgebildet ist, die Kommunikation des Kommunikationsendgerätes (301) über das zweite Subnetzwerk (311) aufzubauen, falls das Kommunikationsendgerät (301) für die Kommunikation über das zweite Subnetzwerk (311) authentifiziert ist.

11. Kommunikationssystem (300) nach einem der vorstehenden Ansprüche, wobei die jeweilige Identifizierungsentität (309, 313) ausgebildet ist, das Kommunikationsendgerät (301) für die Kommunikation zu autorisieren, für die Kommunikation einen Kommunikations-Bearer aufzubauen oder zu modifizieren, einen Kommunikations-Bearer bei einer Änderung einer Netzwerkentität des jeweiligen Subnetzwerkes (307, 311) nachzuführen, die Kommunikation an eine weitere Identifizierungsentität des gleichen Subnetzwerkes des Kommunikationsnetzwerkes (303) zu übergeben.

12. Kommunikationssystem (300) nach einem der vorstehenden Ansprüche, wobei die jeweilige Identifizierungsentität (309, 313) ausgebildet ist, einen Aufenthaltsort des Kommunikationsendgerätes (301) zu verwalten.

13. Kommunikationssystem (300) nach einem der vorstehenden Ansprüche, das eine Basisstation aufweist, mit welcher die erste Identifizierungsentität (309) und die zweite Identifizierungsentität (313) kommunikationstechnisch verbunden sind, und wobei die Basisstation ausgebildet ist, von dem Kommunikationsendgerät (301) eine Verbindungsanfrage mit der Identifikation (302) zu empfangen, und die Identifikation (302) an die jeweilige Identifizierungsentität (309, 313) zwecks Identifizierung des Kommunikationsendgerätes (301) zu übermitteln.

14. Kommunikationssystem (300) nach Anspruch 13, wobei das erste Subnetzwerk (307) ein Default-Subnetzwerk ist, und wobei die Basisstation ausgebildet ist, die Verbindungsanfrage des Kommunikationsendgerätes (301) zu empfangen und an die erste Identifizierungsentität (309) weiterzuleiten, falls die Verbindungsanfrage keine Subnetzwerk-Kennung (306), welche ein Subnetzwerk (307, 311) identifiziert, aufweist.
